# DEMANDE DE BREVET EUROPEEN

(11) **EP 1 217 504 A1**
(43) Date de publication de la demande: **26.06.2002**
(21) Numéro de dépôt: 01000769.8
(22) Date de dépôt: 18.12.2001
(51) Int. Cl.: G06F 3/023, G06F 17/27

(54) **Procédé de correction orthographique d'une saisie alphanumérique**

(30) Priorité: 20.12.2000 FR 0016714
(71) Demandeur: SAGEM S.A., 75015 Paris (FR)
(72) Inventeur: Delfosse, Olivier, 78560, Port-Marly (FR); Ranguin, Max, 93500, Pantin (FR)
(74) Mandataire: Schmit, Christian Norbert Marie

(57) **Abrégé**

L'invention concerne un procédé de correction orthographique d'un texte saisi au moyen d'un clavier alphanumérique (127). Le procédé exploite un système de correction d'erreurs orthographiques utilisé habituellement pour des textes tapés sur des claviers réduits (130). Le procédé selon l'invention prévoit notamment la conversion (202) des mots tapés sur le clavier alphanumérique (127) en mots de rangs interprétables par un générateur de mots pour clavier réduit (130).

## Description

La présente invention a pour objet un procédé de correction orthographique d'une saisie alphanumérique. Elle peut être mise en oeuvre au sein de tout appareil comportant un système de traitement de texte adapté à des textes tapés sur un clavier réduit, et susceptible de pouvoir recevoir des informations tapées sur un clavier du type alphanumérique. Un objet de l'invention est d'exploiter un système de traitement de texte adapté au traitement des données saisies sur un clavier réduit pour effectuer une correction orthographique d'un texte tapé sur un clavier alphanumérique.

Par clavier alphanumérique, on désigne l'ensemble des claviers comportant notamment la totalité des caractères, c'est à dire des lettres et des caractères spéciaux, qui peuvent être utilisés pour la composition d'une phrase, et plus particulièrement de mots, dans une langue donnée. Par caractères spéciaux, on désigne par exemple les tirets, les apostrophes, les signes de ponctuation, ou encore les espaces entre les mots. Une des particularités de ce type de clavier est que les différentes lettres sont affectées à des touches distinctes du clavier. Une touche de ce type de clavier ne peut donc être associée qu'à une unique lettre, et/ou éventuellement à différents caractères spéciaux et/ou à un chiffre. Par clavier réduit, on désigne l'ensemble des claviers à partir desquels on peut composer l'ensemble des mots d'une langue donnée, et donc à partir desquels on a accès à l'ensemble des caractères intervenant dans cette langue, différentes lettres et caractères spéciaux étant affectés à une même touche. Ainsi, un clavier réduit comporte nécessairement un nombre de touches inférieur au nombre de lettres qu'il est possible de saisir avec ce clavier.

Le champ d'application de l'invention est constitué par l'ensemble des appareils qui peuvent recevoir un texte tapé sur un clavier réduit, et qui comportent un système de traitement de texte adapté à ce type d'entrée d'information. Un système de traitement de texte, appelé aussi générateur de mots, désigne ici un système qui permet de produire une information née de l'interprétation d'un appui sur une touche du clavier, et qui permet d'exploiter les informations ainsi générées. Le domaine de l'invention comprend donc par exemple des appareils tels que les décodeurs de télévision numérique qui font intervenir des télécommandes. En effet, ces télécommandes comportent un clavier réduit constitué notamment de dix touches numériques avec lesquelles il est également possible de saisir tous les caractères d'un alphabet, plus éventuellement certains caractères spéciaux.

Un système de traitement de texte connu de l'état de la technique utilisant des claviers réduits est le système dit T9. Dans ce système, un clavier réduit comportant dix touches numériques, numérotées de 0 à 9, est utilisé. Chacune de ces dix touches correspond d'une part à un chiffre et d'autre part à un certain nombre de lettres ou de caractères spéciaux. Dans la mise en oeuvre du système T9, chaque touche, en plus de sa signification numérique, correspond à au moins 3 caractères. Ces caractères ont un certain ordre sur la touche. Lorsqu'on souhaite accéder à l'un des caractères de cette touche, hors le caractère numérique, il faut d'une part placer le clavier dans une mode de saisie alphabétique, puis appuyer le nombre de fois nécessaire sur la touche pour faire afficher le caractère souhaité. Il est aussi possible de maintenir un appui sur cette touche, ce qui a pour effet de faire défiler tous les caractères correspondant à cette touche. On relâche alors la touche au moment où le caractère que l'on souhaite afficher apparaît.

Le système T9 fonctionne essentiellement à l'aide d'un algorithme, dit algorithme T9, qui joue notamment le rôle de détecteur d'erreurs de frappe. Le fonctionnement de cet algorithme est le suivant : chaque caractère tapé est mémorisé dans une mémoire tampon, dite mémoire tampon de caractères ; pour chaque lettre tapée sur un clavier réduit, ou pour chaque caractère spécial tapé sur ce clavier, un chiffre, appelé rang, correspondant à la touche qui vient d'être pressée, est mémorisé. Un même rang peut donc désigner plusieurs caractères qui ont comme particularité commune d'être accessibles depuis une unique touche du clavier réduit. Lorsqu'un mot est entièrement tapé, on a donc mémorisé autant de chiffres qu'il existe le lettres et de caractères spéciaux dans ce mot. L'algorithme T9, après avoir détecté que ce mot est terminé, procède à une lecture de la succession de chiffres associés à ce mot et qui ont été mémorisés. Cette succession de chiffres, qui correspond à un mot tapé, est appelé mot de rangs. Le mot de rangs est alors confronté à un dictionnaire électronique, dit dictionnaire de mots de rangs, qui est contenu dans un premier module de mémoire et qui contient toutes les successions de chiffres possibles qui sont susceptibles de correspondre à un ou plusieurs mots de la langue utilisée.

Si le mot de rangs considéré n'est pas contenu dans le dictionnaire de mot de rangs, alors un message d'erreur est envoyé à l'utilisateur. Si le mot de rangs est contenu dans le dictionnaire de mots de rangs, une liste de mots associée à ce mot de rangs est alors extraite d'un deuxième dictionnaire électronique, dit dictionnaire de mots, contenu dans un deuxième module de mémoire. La liste de mots est ainsi constituée de tous les mots dont la conversion en mots de rangs est semblable au mot de rang analysé. Le mot initialement tapé, qui est contenu dans la mémoire tampon de caractères, est alors confronté à cette liste de mots. Une comparaison entre le mot tapé et le mot contenu dans la liste est effectuée. Si aucun des mots de la liste ne correspond au mot tapé, un message d'erreur apparaît ; sinon aucune erreur n'est signalée à l'utilisateur. Ce type de fonctionnement permet de détecter de nombreuses erreurs de frappe qui proviennent du fait que plusieurs lettres sont associées à une unique touche, et sont par conséquent plus difficiles d'accès.

Les décodeurs de télévision numérique développent fortement leur fonctionnalité. Ils peuvent être aujourd'hui connectés à un clavier alphanumérique qui facilite par exemple l'utilisation de leurs éventuelles fonctions Internet. La présence d'un clavier alphanumérique est en effet de plus en plus indispensable pour faciliter à l'utilisateur l'écriture de mots, car si les systèmes à clavier réduits sont économiques en terme de touches utiles, et sont pratiques pour taper épisodiquement des mots, ils demeurent contraignant d'utilisation lorsqu'il faut taper plusieurs mots à la suite. D'une façon générale, on peut prévoir qu'à plus ou moins long terme l'ensemble des appareils qui font appel à des claviers réduits auront la possibilité d'être complétés par des périphériques de type claviers alphanumériques, qui seront utilisés de façon préférée pour des textes dont la frappe à l'aide d'un clavier réduit s'avérera trop fastidieuse. L'ensemble des appareils concernés par la présente invention est donc constitué des appareils comportant un clavier réduit, et notamment les téléphones mobiles, qui sont équipés d'un clavier réduit.

Un des problèmes qui apparaît avec l'utilisation conjointe d'un clavier réduit et d'un clavier alphanumérique est qu'il faut prévoir pour chacun des modes de frappe, c'est à dire pour une saisie sur un clavier réduit ou sur un clavier alphanumérique, un système de traitement de texte particulier. Comme on l'a vu dans le cas du système T9, les systèmes de traitement de texte sont relativement coûteux en terme de mémoire car ils doivent contenir des dictionnaires de mots. Par ailleurs, l'ajout d'un périphérique du type clavier alphanumérique sur un appareil possédant déjà un périphérique de type clavier réduit doit s'accompagner d'un ensemble de programmes permettant de gérer le fonctionnement d'un tel clavier, et de différentes applications liées au système de traitement de texte, par exemple celles dédiées à la détection des erreurs orthographiques. Parfois, certaines de ces applications peuvent même sembler redondantes du fait qu'elles existent simultanément, mais distinctement, pour la gestion du fonctionnement de chacun des deux types de claviers. La détection d'erreurs orthographiques des mots tapés sur un clavier alphanumérique ne fait pas, elle non plus, l'objet d'un traitement semblable à celui que subissent les mots tapés sur un clavier réduit, puisque ces mots ne sont pas associés à des mots de rangs.

Le procédé selon l'invention permet de pallier l'ensemble des problèmes qui viennent d'être exposés. En effet, dans l'invention, on exploite un système de détection d'erreurs orthographiques utilisé initialement pour des textes saisis à l'aide d'un clavier réduit pour déterminer d'éventuelles erreurs orthographiques qui auraient été commises lors de la saisie d'un texte au moyen d'un clavier alphanumérique. A cet effet, le procédé selon l'invention prévoit une étape dans laquelle chacun des caractères tapés à l'aide d'un clavier alphanumérique est converti en un rang qui est directement exploitable par un système de détection d'erreurs orthographiques du système de détection d'erreurs spécifique au clavier réduit.

Le rang est obtenu à l'aide d'une étape de conversion qui permet d'associer à plusieurs caractères distincts, et même à plusieurs lettres distinctes qui correspondent donc à des touches différentes du clavier alphanumérique, le même rang. Ce rang est attribué conformément aux correspondances existant entre les différentes lettres et les différents rangs lors d'une saisie de texte à l'aide du clavier réduit. Une liste de mots possibles est alors constituée. Ainsi, quelle que soit la lettre tapée sur un clavier alphanumérique ou sur un clavier réduit, un rang unique lui sera attribué dans les deux cas. La liste de mots est confrontée avec le mot effectivement tapé à l'aide du clavier alphanumérique, cette confrontation permettant de détecter une éventuelle erreur orthographique.

L'invention concerne donc un procédé de correction orthographique d'un texte saisi sur un clavier alphanumérique comportant notamment les étapes consistant à :
- taper différents caractères, constituant un ou plusieurs mots tapés, sur le clavier alphanumérique ;
- transmettre les différents caractères tapés dans une mémoire de caractères accessible pour un système de traitement de texte pour clavier réduit ;
caractérisé en ce qu'il comporte les étapes supplémentaires consistant à :
- interpréter les différents caractères tapés en faisant intervenir le système de traitement de texte pour clavier réduit afin de constituer, pour chaque mot tapé, une liste de mots plausibles et afin d'associer chaque mot tapé à une liste de mots plausibles ;
- comparer chaque mot tapé à la liste de mots plausibles qui lui est associée ;
- le cas échéant, signaler une erreur.

De préférence, le système de traitement de texte pour clavier réduit est un système T9. Dans une variante de mise en oeuvre du procédé selon l'invention, l'étape d'interprétation des différents caractères comporte notamment les étapes supplémentaires consistant à :
- convertir chacun des différents caractères en un rang exploitable par le système de traitement de texte pour clavier réduit, chacun des mots tapés étant ainsi converti en un mot de rangs ;
- mémoriser les différents mots de rangs dans une mémoire de rangs du dispositif de traitement de texte ;
- effectuer une confrontation entre les mots de rangs et un dictionnaire de mots de rangs contenu dans une mémoire de données ;
- déterminer la liste de mots plausibles en extrayant d'un dictionnaire de mots un ensemble de mots associé à un mot de rangs semblable à au moins l'un des mots de rangs mémorisés.

Par ailleurs, l'étape de signalement d'une erreur peut comporter notamment les étapes supplémentaires consistant à :
- afficher, de façon automatique, (ou, éventuellement sur demande)sur un écran associé au clavier, la liste de mots plausibles constituée pour chaque mot tapé ;
- offrir à un utilisateur des moyens de sélection d'un mot plausible contenu dans chaque liste de mots plausibles.

Dans des modes de mise en oeuvre préférés du procédé selon l'invention, les étapes d'interprétation des caractères tapés, de comparaison de mots tapés et le signalement d'une erreur sont effectuées de façon automatique à chaque terminaison d'un mot tapé.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, une illustration des moyens utiles pour la mise en oeuvre du procédé selon l'invention ;
- à la figure 2, un organigramme illustrant les différentes étapes intervenant dans le procédé selon l'invention.

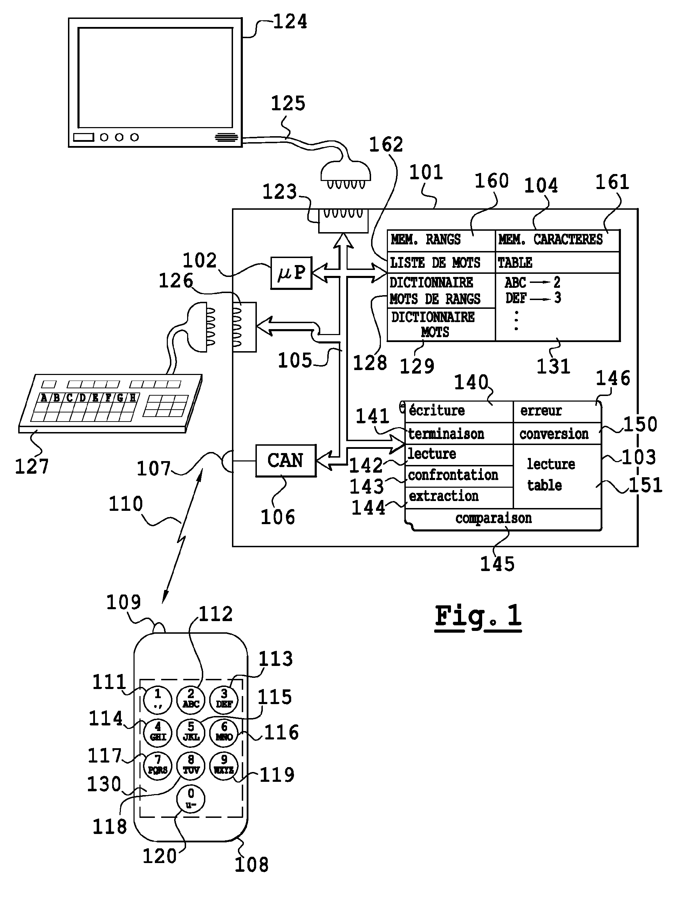

La figure 1 montre un appareil 101. Dans un exemple préféré, cet appareil 101 est un décodeur de télévision numérique. Il comporte notamment un microprocesseur 102, une mémoire de programmes 103 et une mémoire de données 104. Les éléments 102 à 104 sont connectés à un bus de communication bidirectionnel 105. Le bus 105 comporte tous les fils, ou pistes, nécessaires à la circulation des signaux d'adresses, de données, de commandes et d'interruptions. Le décodeur 101 comporte d'autre part un convertisseur analogique numérique 106 connecté d'une part au bus 105, et d'autre part à un capteur infrarouge 107. Le capteur infrarouge 107 reçoit des signaux émis par une télécommande 108. La télécommande 108 émet ces signaux via un capteur infrarouge 109. Il existe donc une liaison 110 entre la télécommande 108 et le décodeur 101. Les signaux reçus par le capteur 107 sont transmis au convertisseur analogique numérique 106 qui les convertit en données numériques. Ces données numériques sont lues par le microprocesseur 102 par l'intermédiaire du bus 105. Dans la pratique, la liaison 110 se fait grâce à des signaux infrarouges, mais il est tout à fait envisageable qu'elle se fasse grâce à des signaux radio.

La télécommande 108 comporte différentes touches disposées sur un clavier réduit 130. Des touches 111 à 119 correspondent aux caractères numériques 1 à 9 respectivement, la touche 120 correspondant au caractère 0. D'autre part, la touche 111 correspond aussi aux caractères "point" et "apostrophe", la touche 102 aux caractères A B C, la touche 103 aux caractères DEF, la touche 104 aux caractères GHI, la touche 105 aux caractères GKL, la touche 106 aux caractères MNO, la touche 107 aux caractères PQRS, la touche 108 aux caractères TUV, 109 la touche aux caractères WXYZ, la touche 120 aux caractères "espace" et "tiret". L'affectation des caractères aux touches 111 à 120 est purement arbitraire, mais utile pour la description. Le procédé selon l'invention peut être mis en oeuvre même si l'affectation des caractères à ces touches est différente. De même, le nombre de touches est arbitraire. Il pourrait y en avoir plus ou moins sans que le principe de l'invention soit changé. Par soucis de simplification de la description, chaque lettre aura pour rang le chiffre correspondant au caractère numérique marqué sur la touche à partir de laquelle elle est accessible.

L'appareil 101 comporte aussi un connecteur 123 connecté au bus 105. Le connecteur 123 permet d'assurer une liaison entre l'appareil 101 et un écran 124. Cette liaison s'effectue par exemple par un câble 125. Dans l'exemple décrit, le connecteur 123 comporte le circuit nécessaire pour transformer les données numériques qu'il reçoit de la part du microprocesseur 102 en des données analogiques qui peuvent être affichés par l'écran 124. L'écran 124 peut aussi être un écran numérique capable d'assimiler directement les données numériques fournies par le microprocesseur 102. Il peut également être un écran à cristaux liquides. Dans certaines variantes de l'invention, l'écran 124 peut être remplacé ou coexister avec un dispositif de visualisation non représenté disposé sur la télécommande 108. D'une façon générale les écrans qui interviennent dans la mise en oeuvre du procédé selon l'invention sont des périphériques qui servent notamment à afficher les différents caractères saisis.

Un deuxième connecteur 126 connecté au bus 105 permet également d'effectuer la liaison entre l'appareil 101 et un clavier alphanumérique 127. La mémoire de programmes 103 contient un ensemble d'applications qui permettent de détecter d'éventuelles erreurs orthographiques dans des mots saisis à l'aide du clavier réduit :
- une application 140, dite application d'écriture dans la mémoire de données 104, permet de transmettre, vers un module de mémoire 160 dit mémoire de rangs, l'ensemble des rangs obtenus suite à la saisie de caractère, ces caractères étant mémorisés dans une mémoire de caractères 161 ;
- une application 141, dite application de détermination de terminaison de mots, permet de détecter la fin d'un mot saisi à l'aide du clavier réduit ;
- une application 142, dite application de lecture de mots de rangs, permet d'extraire de la mémoire de rangs 160 un mot de rangs qui y a été mémorisé ;
- une application 143, dite application de confrontation, permet de comparer un mot de rangs extrait de la mémoire de rangs 160 à un dictionnaire de mots de rangs 128 ;
- une application 144, dite application d'extraction des mots plausibles, permet de sélectionner dans un dictionnaire de mots 129 l'ensemble des mots correspondant au mot de rangs examiné, puis d'écrire ce mot sélectionné dans une liste de mots plausibles 162 ;
- une application 145, dite application de comparaison, permet d'effectuer une comparaison, caractère après caractère, entre un mot contenu dans la mémoire de caractère 161 et chacun des mots contenus dans la liste de mots plausibles 162 ;
- une application 146, dite application de signalement d'erreurs orthographiques, permet de signaler à un utilisateur qu'il vient de commettre une erreur orthographique.

Un exemple peut permettre de clarifier le fonctionnement du détecteur d'erreurs orthographiques : imaginons que l'utilisateur décide de taper le mot français "MOT" sur le clavier réduit 130. Il commet une erreur et tape "MNT". Le mot de rangs associé à "MNT" est "668". La liste des mots plausibles, constituée à partir de l'ensemble des mots du dictionnaire français de mots présentant le mot de rangs "668" sera constituée des mots "MOT", "MOU", "ONT" et "ONU". L'utilisateur aura alors le choix entre ces quatre mots pour corriger son erreur de frappe.

Afin de mettre en oeuvre le procédé selon l'invention, des applications supplémentaires sont ajoutées. On trouve ainsi une application 150, dite application de conversion, qui permet d'attribuer à un caractère saisi à l'aide du clavier alphanumérique 127 un rang interprétable et exploitable par les différentes applications qui sont mises en oeuvre lorsqu'un caractère est saisi à l'aide du clavier réduit. A cet effet, une application 151, dite application de lecture d'une table de conversion, est mise en oeuvre ; cette application permet d'accéder et d'utiliser une table de conversion 131 qui permet d'attribuer à chacun des caractères saisis un rang qui correspond au rang que ce caractère possède lorsqu'il est saisi depuis un clavier réduit. Cette table peut être programmée dès la fabrication, et/ou être paramétrée par un utilisateur.

L'ensemble des applications mentionnées peuvent être contenues dans la mémoire de programmes 103, ou bien peuvent être réalisées par des circuits électroniques spécifiques. Par ailleurs, les différents dictionnaires, mémoires, tables ou listes de mots peuvent être regroupés dans la mémoire de données 104, mais ce n'est pas une obligation. Le microprocesseur 102 gère l'ensemble des échanges d'informations entre ces différents éléments.

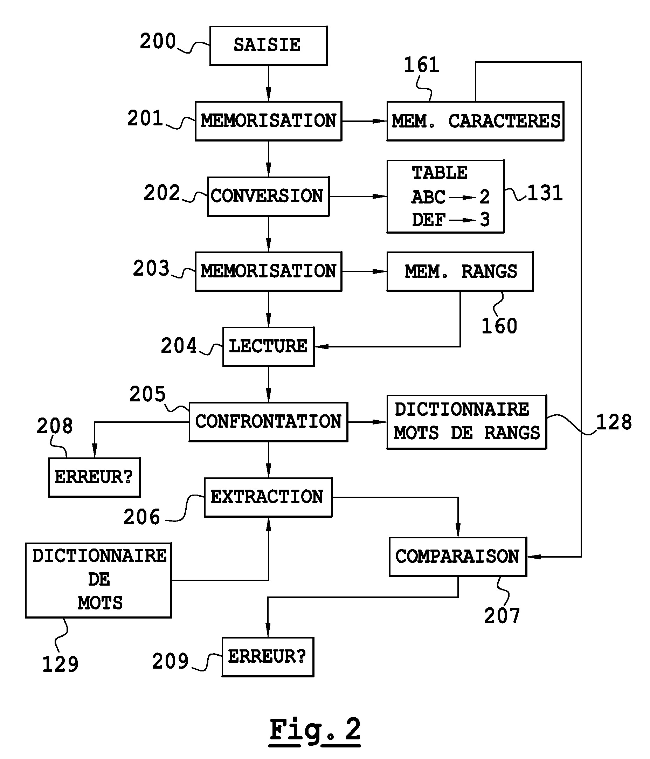

La mise en oeuvre du procédé selon l'invention dans un appareil du type de celui décrit à la figure 1 est expliqué au moyen de l'organigramme de la figure 2. Une première étape 200 du procédé consiste en la saisie sur le clavier alphanumérique 127 d'un texte constitué de plusieurs caractères constituant des mots. Ces caractères sont mémorisés lors d'une étape 201, le plus souvent sous la forme d'un code ASCII (American Standard Code for Information Interechange en anglais), dans la mémoire de caractères 161. L'application de conversion peut alors être mise en oeuvre dans une étape 202. Elle permet d'obtenir à l'aide de la table de conversion 131 un ensemble de mots de rangs qui sont mémorisés dans la mémoire de rangs 160 au cours d'une étape 203.

L'étape suivante du procédé selon l'invention consiste en la mise en oeuvre d'un algorithme adapté au clavier réduit, par exemple l'algorithme T9. Cet algorithme consiste en la mise en oeuvre successive des applications de lecture de mots de rangs 142, de confrontation 143, et éventuellement d'extraction de mots plausibles 144 respectivement dans des étapes 204, 205 et 206. L'étape suivante est l'étape de comparaison 207. Dans cette étape, les mots tapés au moyen du clavier alphanumérique 127 sont comparés, caractère après caractère, à chacun des mots de la liste de mots plausibles qui lui est associée.

Deux situations de détection d'erreur orthographique peuvent se présenter :
- la première correspond au cas où un mot tapé est converti en un mot de rangs qui n'est pas présent dans le dictionnaire de mots de rangs 128. Ce type d'erreur est détecté à l'issue de l'étape de confrontation 143. Dans ce cas, un message d'erreur est transmis à l'utilisateur dans une étape 208.
- la deuxième correspond au cas où un mot tapé est converti en un mot de rangs présent dans le dictionnaire de mots de rangs, mais où aucun des mots de la liste de mots plausibles ne correspond au mot effectivement tapé. Ce type d'erreur est détecté à l'issue de l'étape de comparaison 207. Dans ce cas, un message d'erreur est transmis à l'utilisateur dans une étape 209, éventuellement accompagné de la liste de mots plausibles, qui peut être affichée par exemple sur l'écran 124. L'utilisateur peut alors sélectionner, au moyen de commandes appropriées accessibles depuis le clavier alphanumérique ou depuis le clavier réduit, le mot qu'il voulait effectivement taper, ou recommencer la saisie du mot erroné, ou encore ignorer le message d'erreur.

L'application de détermination de terminaison de mots 141 peut être mise en oeuvre de façon optionnelle. Lorsque elle est active, elle détecte de façon automatique la fin de chaque mot tapé, par exemple en repérant la présence des espaces entre les mots, ou la présence de signes de ponctuation. Les différentes étapes présentes à la figure 2 sont alors automatiquement mises en oeuvre pour chaque mot dont la saisie est achevée. Lorsqu'elle n'est pas active, les différentes étapes décrites à la figure 2 sont déclenchées par une action appropriée de l'utilisateur. Plusieurs listes de mots plausibles peuvent alors être soumises simultanément à l'utilisateur, chacune de ces listes étant affectée à un des mots dont l'orthographe est erroné.

## Revendications

1. Procédé de correction orthographique d'un texte saisi sur un clavier alphanumérique (127) comportant notamment les étapes consistant à :
- taper (200) différents caractères, constituant un ou plusieurs mots tapés, sur le clavier alphanumérique (127) ;
- transmettre (201) les différents caractères tapés dans une mémoire de caractères (161) accessible pour un système de traitement de texte pour clavier réduit (130) ;
**caractérisé en ce qu'**il comporte les étapes supplémentaires consistant à :
- interpréter les différents caractères tapés au moyen du système de traitement de texte pour clavier réduit (130) afin de constituer, pour chaque mot tapé, une liste de mots plausibles, et afin d'associer chaque mot tapé à une liste de mots plausibles ;
- comparer (207) chaque mot tapé à la liste de mots plausibles qui lui est associée ;
- le cas échéant, signaler (208, 209) une erreur.

2. Procédé de correction orthographique selon la revendication précédente, **caractérisé en ce que** le système de traitement de texte pour clavier réduit (130) est un système T9.

3. Procédé de correction orthographique selon l'une des revendications précédentes, **caractérisé en ce que** l'étape d'interprétation des différents caractères comporte notamment les étapes supplémentaires consistant à :
- convertir (202) chacun des différents caractères en un rang exploitable par le système de traitement de texte pour clavier réduit (130), chacun des mots tapés étant ainsi converti en un mot de rangs ;
- mémoriser (203) les différents mots de rangs dans une mémoire de mots de rangs (160) ;
- effectuer une confrontation (205) entre les mots de rangs et un dictionnaire de mots de rangs (128) contenu dans une mémoire de données (203);
- déterminer la liste de mots plausibles en extrayant (206) d'un dictionnaire de mots (129) un ensemble de mots associé à un mot de rangs semblable à au moins l'un des mots de rangs mémorisés.

4. Procédé de correction orthographique selon l'une des revendications précédentes, **caractérisé en ce que** l'étape de signalement (208 ;209) d'une erreur comporte notamment les étapes supplémentaires consistant à :
- afficher, de façon automatique, sur un écran associé au clavier, la liste de mots plausibles constituée pour chaque mot tapé ;
- offrir à un utilisateur des moyens de sélection d'un mot plausible contenu dans chaque liste de mots plausibles.

5. Procédé de correction orthographique selon l'une des revendications précédentes, **caractérisé en ce que** les étapes d'interprétation de caractères tapés, de comparaison (207) de mots tapés, et de signalement (208, 209) d'une erreur sont mises en oeuvre de façon automatique à chaque terminaison d'un mot tapé.

6. Procédé de correction orthographique selon l'une des revendications précédentes, **caractérisé en ce qu'**il est mis en oeuvre au sein d'un décodeur de télévision numérique.

7. Procédé de correction orthographique selon l'une des revendications1 à 5, **caractérisé en ce qu'**il est mis en oeuvre au sein d'un téléphone mobile.
